# EUROPEAN PATENT APPLICATION

(11) **EP 1 536 310 A2**
(43) Date of publication of application: **01.06.2005**
(21) Application number: 04257073.9
(22) Date of filing: 15.11.2004
(51) Int. Cl.: G06F 1/00

(54) **System and method for verifying validity of a product**

(30) Priority: 14.11.2003 JP 2003385391; 21.09.2004 JP 2004273901
(71) Applicant: Ricoh Company, Ltd., Tokyo 143-8555 (JP)
(72) Inventor: Ohta, Yusuke, Kanagawa-ken 213-0011 (JP)
(74) Representative: Mounteney, Simon James

(57) **Abstract**

A product validity verifying system for verifying validity of a product including a system management unit configured to collect specific information associated with components of a verification target product. The system also includes an electronic signature generating unit configured to generate an electronic signature based on specific information provided from the system management unit, and a verification unit configured to verify the validity of the target product based on making comparisons between specific information restored from the electronic signature and specific information provided from the system management unit.

## Description

### BACKGROUND OF THE INVENTION

### FIELD OF THE INVENTION

The present invention generally relates to systems and methods for verifying validity of various products such as electronics devices and home electronic appliances, and more particularly, to systems and methods for verifying the validity of a product based on detecting a falsification or change which occurs while the product is sent from a manufacturer to a customer.

### DESCRIPTION OF THE RELATED ART

While a product is delivered from a manufacturer to a customer, various third parties other than the manufacturer and the customer (e.g., a delivery company, a retail store, etc.) generally intervene during the delivery. However, these third parties are not always trusted persons. Thus there is a possibility that falsification and/or change in a product can occur during the delivery. In particular, when a product is large, it is difficult to secure a reliable method of delivery, such as a public mail system. Further, it is difficult for a customer to notice dishonesties, such as falsification and/or change in the product.

For example, in information-related security products which deal with important information and have security functions such as user identification or access control, etc. for accessing to these products, a manufacturer endows these products with robust security functions. However, when program or hardware is falsified or changed, a problem occurs.

In ISO/IEC 15408, which is an international standard of information technology (IT) security evaluation, it is required to provide some means capable of offering assurances that valid products are sent to customers for certain, for example, delivering a product from a manufacturer straight to a customer.

In addition, it is possible that in general home electric appliances that are unrelated to information security, a third party having hostility towards a manufacturer can remove a security function introduced as a measure against product liability law. In such a case, a problem similar to the problems discussed above can occur.

Therefore, in order to solve the above-mentioned problems, Japanese Laid-Open Patent Publication No. 2000-011114 (the entire contents of which are hereby incorporated by reference) describes a product authentication system that vouches for the validity by tagging the product.

With regard to e-mails or electronic files, the method of vouching for the validity of the contents thereof by using electronic signatures is generally used. However, such techniques are not applied to IT products other than e-mails and electronic files.

In addition, Japanese Laid-Open patent Publication No. 2000-011114 describes verification algorithm based on public key encryption technology. The product authentication system in Japanese Laid-Open patent Publication No. 2000-011114 is effective in detecting a product that is entirely counterfeit (e.g., a counterfeit brand-name product). However, the product authentication system is ineffective in detecting dishonesties when a part of a component of software, firmware, hardware, etc., is falsified or changed.

### SUMMARY OF THE INVENTION

The present invention set out to overcome the above problems and accordingly a first aspect provides a product validity verifying system that includes a system management unit configured to collect specific information associated with components of a verification target product, an electronic signature generating unit configured to generate an electronic signature based on specific information provided from the system management unit, and a verification unit configured to verify the validity of the target product based on making comparisons between specific information restored from the electronic signature and specific information provided from the system management unit.

Using the above-described system, it is possible to confirm the existence of falsification or change, and to avoid using a dishonest product without noticing.

Preferred features of this aspect of the invention are set out in Claims 2 to 9.

According to a second aspect of the invention, there is provided a verification target apparatus as set out in Claim 10. Preferred features of this aspect of the invention are set out in Claims 11 to 17.

A further aspect of the invention provides a method for verifying the validity of a target product as set out in claim 18.

A still further aspect of the invention provides a method for verifying the validity of a target product as set out in claim 19. Preferred features of this aspect of the invention are set out in Claims 20 to 31.

A still further aspect of the invention provides a plurality of components as set out in claim 32.

A still further aspect of the invention provides a product validity verifying system comprising:
a system management unit configured to collect specific information associated with components of a verification target product;
an electronic signature generating unit configured to generate an electronic signature based on specific information provided from the system management unit by using a private key of a manufacturer of the target product; and
a verification unit configured to verify the validity of the target product based on specific information recollected from the target product and the electronic signature;
wherein at a manufacturer site, the electronic signature generating unit generates the electronic signature from specific information associated with components of the target product by using the private key of the manufacturer, at a customer site, the verification unit provided from the manufacturer which includes a public key of the manufacturer verifies the validity of the target product based on specific information recollected from the target product and the electronic signature.
Both specific information associated with hardware of the target product and specific information associated with software of the target product may be used as specific information.
Values calculated by one-way function for each execution module file of software components may be used as specific information.
A value calculated by one-way function for a file including whole execution modules of software components may be used as specific information.
The one-way function may be a hash function.
A specific value, which a hardware module has originally, may be used as specific information.
The specific information may be a specific value returned from the target product according to a request of the electronic signature generating unit or the verification unit.
Hardware or software of the target product returns specific information.
The private key may be a specific key generated originally by the manufacturer.
The private key may be a key issued by a reliable third certification department.
The verification unit may be an information processing unit for carrying out a program provided by the manufacturer.
The verification unit may be a dedicated device.
A still further aspect of the invention provides a method for verifying the validity of a target product comprising:
generating an electronic signature from specific information corresponding to components of the target product by using a private key of a manufacturer of the target product; and
verifying the validity of the target product based on specific information recollected from the target product, the electronic signature, and a public key provided from the manufacturer after the target product is sent from a customer of the target product to the manufacturer.
A yet further aspect of the invention provides a method for verifying the validity of a target product comprising:
inputting particular information; and
verifying the validity of the target product based on whether other particular information is output or not.
The verifying step may comprise outputting other particular information for inputting particular information based on an algorithm which is included in a valid product and which only the manufacturer of the target product knows.
The verifying step may comprise outputting other particular information for inputting particular information based on a private key which is included in a valid product and which only the manufacturer of the target product knows.
Particular information and other particular information may be delivered from the manufacturer to a delivery destination through a reliable route different from a route of the target product.

Furthermore, other aspects of the present invention provide a method of using the product validity verifying system for verifying the validity of a target product.

These and other features and advantages of the present invention will become apparent upon consideration of the following description of the preferred embodiments of the present invention, taken in conjunction with the accompanying drawings.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings.

Figs. 1A and 1B are schematic views of a product validity verifying system in accordance with a first embodiment of the present invention.

Fig. 2 is a flowchart illustrating a process of verifying the validity of a product in accordance with the first embodiment of the present invention.

Figs. 3A and 3B are schematic views of a product validity verifying system in accordance with a second embodiment of the present invention.

Fig. 4 is a flowchart illustrating a process of verifying the validity of a product in accordance with the second embodiment of the present invention.

Figs. 5A and 5B are schematic views of a product validity verifying system in accordance with a third embodiment of the present invention.

Fig. 6 is a flowchart illustrating a process of verifying the validity of a product in accordance with the third embodiment of the present invention.

Fig. 7 is an explanatory display view of encrypted result on an operation panel.

### DETAILED DESCRIPTION OF THE PREFERRED EMBODIMENTS

Referring now to the drawings, wherein like reference numerals designate identical or corresponding parts throughout the several views. In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that operate in a similar manner.

### (First Embodiment)

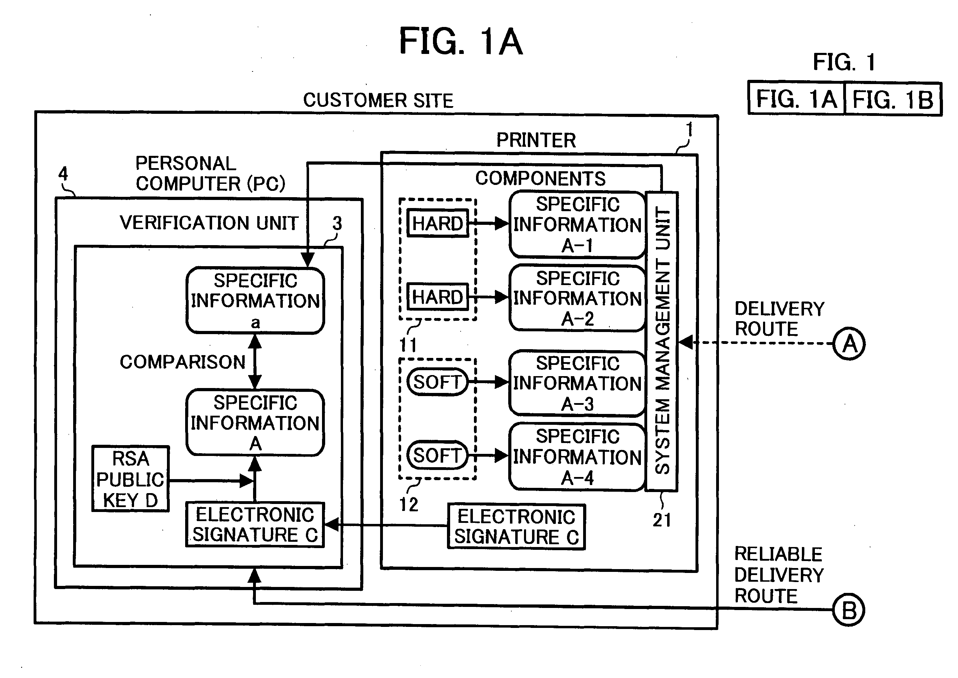

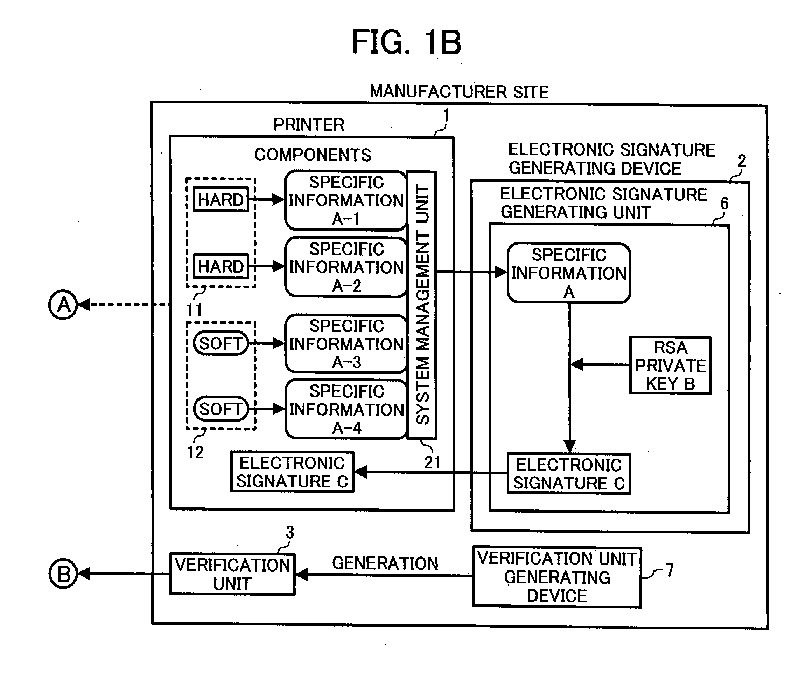

Figs. 1A and 1B are schematic views of a product validity verifying system in accordance with a first embodiment of the present invention. In right side of Fig. 1 (i.e., Fig. 1B), system components at a manufacturer site are depicted. The manufacturer site includes a printer 1 that is a target product for validity verification and an electronic signature generating device 2 that includes an electronic generating unit 6, as components. The printer 1 includes plural hardware 11 and plural software 12 (i.e., programs) as components of the printer 1. The hardware 11 is a card that includes at least one of a central processing unit (CPU), a random access memory (RAM), a nonvolatile memory, such as a network card, a parallel interface (I/F) card, etc. The software 12 is an execution module for running the CPU (i.e., a CPU readable program).

The CPU of the printer 1 executes processes according to software 12, for example, a program for executing functions of a system management unit 21, etc. Further, the CPU of the electronic signature generating device 2 executes processes according to, for example, a program for executing functions of the electronic signature generating unit 6, etc.

Further, the printer 1 includes the system management unit 21 which gathers specific information (specific information *A-1, A-2, A-3...A-N,* where *N* is a number of the components) regarding each component (hardware 11 and software 12) of the printer 1. The system management unit 21 collects specific information from the individual components, gathers together the specific information from all the components, and generates specific information *A* as a whole for the printer 1 (i.e., specific information *A*), and has a function of sending specific information *A* to a requestor. As means for generating final specific information *A,* for example, the system management unit 21 has a function of applying a hash function (for example, SHA-1) to connected specific information *A*. In addition, the hash function is an example of a one-way function, where the function is not limited to the hash function.

The printer 1 can return specific information *A* of the printer 1 made by gathering together the specific information of each component according to an external or internal inquiry. For example, a manufacturer of the printer 1 stores specific information of each component (e.g., an ID number unknown by anyone but the manufacturer) in a tamper-proof nonvolatile memory, or a tamper-proof integrated circuit (IC) chip, etc., included in each component. The system management unit 21 of the printer 1 can read out specific information from the nonvolatile memory or the IC chip, etc. when necessary. In addition, a tamper-proof characteristic can be determined by a resistance to physical damage, for example, analyzing information based on detecting a voltage surge or a signal path, etc.

When components are hardware, each hardware component sends specific information to the system management unit 21 according to a command from the system management unit 21. In addition, another example of specific information is a Media Access Control (MAC) address which is a 12-figure hexadecimal specific number recognized throughout the world when the hardware is a network card.

Further, when components are software, for example, the system management unit 21 applies a hash function to a file including whole binary data of each software (i.e., a file of execution module) and treats a resultant hash value as specific information for the whole of the components of the printer. The system management unit 21 sends its information as specific information A of the printer 1 to an external or internal inquiry site. In addition, the system management unit 21 can apply the hash function to binary data (e.g., a file of execution module) of each software and treats resultant hash values as specific information of the components. The system management unit 21 connects resultant specific information and sends its information as specific information *A* of the printer 1 to an external or internal inquiry site.

When one of inquiry sites is the electronic signature generating device 2 or the electronic generating unit 6, the functions of the electronic signature generating device 2 is carried out by an information-processing device such as a personal computer (PC), etc. In addition, for simplified explanation, the embodiment in which the electronic generating unit 6 executes various processes will be described below. When the electronic generating unit 6 gets specific information *A* from the printer 1, the electronic generating unit 6 encrypts specific information *A* based on a RSA private key B and generates an encrypted electronic signature C. For example, the electronic generating unit 6 writes the encrypted electronic signature C in a nonvolatile memory of the printer 1 through a parallel interface (I/F).

On the other hand, in the left side of Fig. 1 (i.e., Fig. 1A), system components of a customer site are described. The customer site includes the printer 1 delivered from the manufacturer site through a delivery route (e.g., a delivery route in danger of falsification and/or change during the delivery) and a PC 4 as an information-processing device where the verification unit 3 is installed or read. The verification unit 3 is generated at the manufacturer site and includes, for example, an RSA public key D for restoring the electronic signature C written in the printer 1. The verification unit 3 is, for example, sent in the form of a computer readable medium to the customer site through a reliable delivery route secured from falsification and change during the delivery. A CPU of the PC 4, for example, executes processes according to a program for carrying out functions of the verification unit 3. For simplified explanation, the embodiment in which the verification unit 3 executes various processes will be described below.

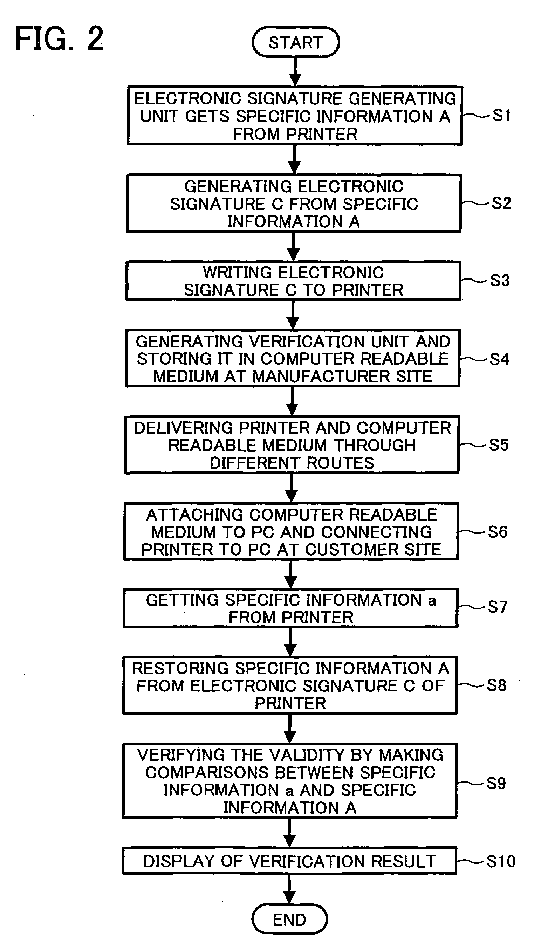

Fig. 2 is a flowchart illustrating a process of verifying the validity of a product in accordance with the first embodiment of the present invention.

At the manufacturer site, the system management unit 21 collects specific information for each specific component (e.g., software, firmware, hardware, etc.) of a product (e.g., the printer 1 in Fig. 1B). The system management unit 21 generates specific information *A* that is aggregative specific information of the printer 1. As mentioned above, the electronic signature unit 6 gets specific information *A* from the system management unit 21 of the printer 1 (step S1). The electronic signature unit 6 generates the electronic signature C based on encrypting specific information *A* by the RSA private key B based on RSA public-key cryptography (step S2). The electronic signature unit 6 writes the electronic signature C in the nonvolatile memory of the printerl (step S3).

Next, a verification unit generating device 7 generates the verification unit 3 including the RSA pubic key D corresponding to a pair key of the RSA private key B and stores the verification unit 3 in a computer readable medium, etc. (step S4). The computer readable medium is, for example, a floppy disk (FD), a computer disk (CD), a Digital Video Disk (DVD), a portable Hard Disk Drive (HDD), and a portable Universal Serial Bus (USB) memory, etc. The verification unit generating device 7 can be included in the electronic generating device 2, or in another device (e.g., a PC).

The manufacturer delivers the printer 1 to the customer through a delivery route. Further, the manufacturer delivers the computer readable medium including the verification unit 3 to the customer through another reliable delivery route, for example, a public mail system (step S5). In addition, the reliable delivery route can be direct delivery by a service man, or a download from a home page of the manufacturer as well as the public mail system. For example, when a download is used as a reliable delivery route, the verification unit 3 can be downloaded to a PC at the customer site.

In addition, the RSA public key of the manufacturer may not be included in the verification unit 3. For example, the RSA public key can be sent from a third certification department which issues a public key certificate to the customer site. For simplified explanation, the embodiment in which the public key D is delivered to the customer site in condition that the public key D is included in the verification unit 3 will be described below.

The customer gets the printer 1 and the computer readable medium including the verification unit 3 through different routes. The customer attaches the computer readable medium to a PC 4 and connects the printer 1 to the PC 4 through a parallel cable (step S6).

Judgment of falsification and/or change is confirmed as below. In addition, as mentioned above, the PC 4 reads out the verification unit 3 from the computer readable medium. The verification unit 3 runs on a CPU of the PC 4.

The system management unit 21 of the printer 1 then collects specific information from each component and generates specific information *a.* The verification unit 3 gets specific information *a* (step S7). The verification unit 3 restores specific information *A* from the electronic signature C stored in the product, based on the public key D of the manufacturer (step S8). The verification unit 3 verifies the validity of the product by making comparisons between specific information *a* and specific information *A* (step S9). Further, the verification unit 3 displays verification result on a display device, etc. of the PC 4 (step S10).

Therefore, in step S9, when specific information *a* is different from specific information *A*, it means that falsification and/or change of components occurred during the delivery. In step S10, the verification unit 3 causes the display device of the PC 4 to display the indication that falsification and/or change of components occurred. Thus, the customer can confirm the existence of falsification and/or change and avoid using a dishonest product without noticing.

In addition, in the present embodiment the electronic generating unit 6 and/or the verification unit 3 are external to the printer 1 is described. However, the electronic generating unit 6 and/or the verification unit 3 can alternatively be provided in the printer 1. The printer 1 may print out the verification result, etc.

### (Second Embodiment)

In the above-mentioned first embodiment, an embodiment in which the printer 1 including the electronic signature is delivered from the manufacturer site to the customer site is described. The electronic signature is not included in the printer 1, the electronic signature can be delivered with the verification unit from the manufacturer site to the customer site. In the second embodiment, an embodiment is described in which the electronic signature is delivered with the verification unit from the manufacturer site to the customer site. In addition, in the second embodiment, the points different from the first embodiment will be described.

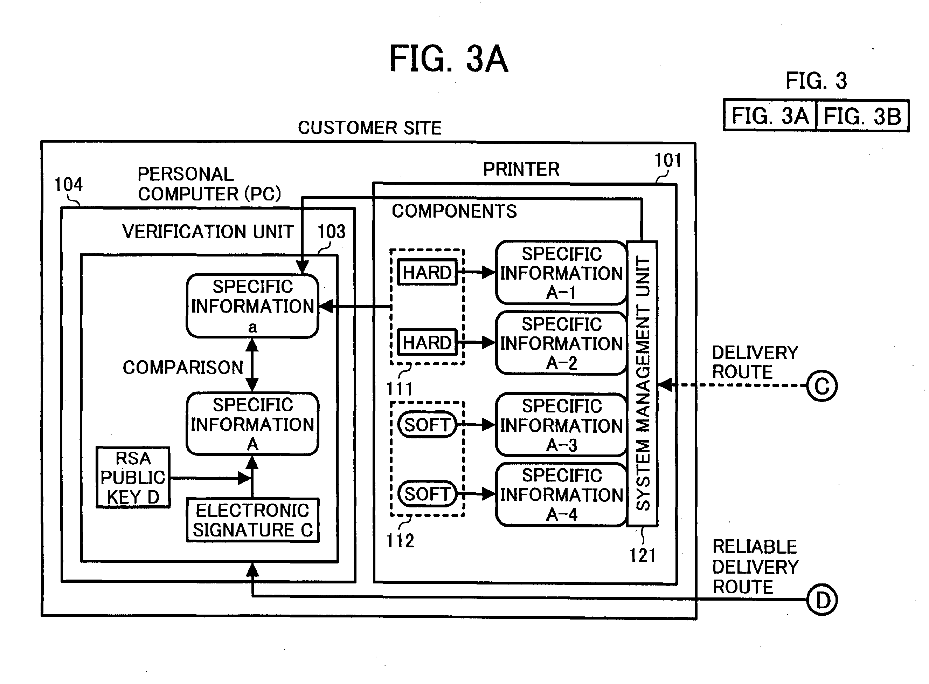

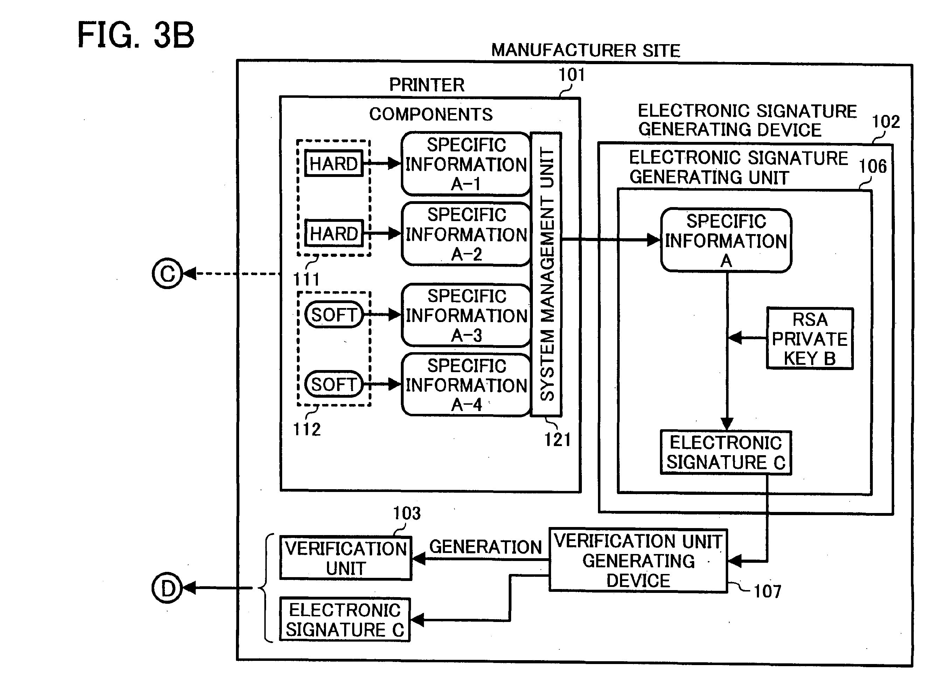

Figs. 3A and 3B are schematic views of a product validity verifying system in accordance with a second embodiment of the present invention. In this embodiment, the printer 101 includes plural hardware 111 and plural software 112 (i.e., programs) as components of the printer 101. In the present embodiment, when the electronic signature generating unit 106 gets specific information *A* from the printer 101, the electronic signature generating unit 106 encrypts specific information *A* based on the RSA private key B and generates the electronic signature C. For example, the electronic signature generating unit 106 sends the electronic signature C to the verification unit generating device 107.

The verification unit generating device 107 getting the electronic signature C generates the verification unit. For example, the verification unit generating device 107 stores the electronic signature C and the verification unit in a computer readable medium. In addition, the electronic signature generating unit 106 can generate the verification unit 103.

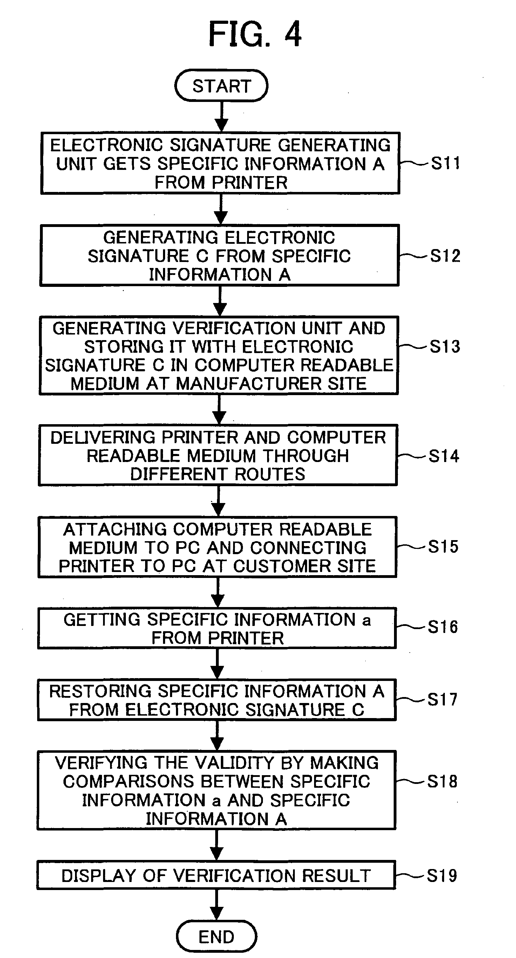

Fig. 4 is a flowchart illustrating a process of verifying the validity of a product in accordance with the second embodiment of the present invention. In the manufacturer site, the system management unit 121 collects specific information specific to each component (e.g., software, firmware, hardware, etc.) of a product (e.g., the printer 101 in the present embodiment) and generates specific information *A* that is aggregative specific information of the printer 101. As described above, the electronic signature unit 106 gets specific information *A* from the system management unit 121 of the printer 101 (step S11). The electronic signature unit 106 generates the electronic signature C by encrypting specific information *A* by the RSA private key B of RSA public-key cryptography (step S12).

Next, the verification unit generating device 107 or the electronic signature generating unit 106 generates the verification unit 103 including the RSA pubic key D corresponding to a pair key of the private key B and stores the electronic signature C and the verification unit 103 in the computer readable medium (step S13). The verification unit generating device 107 can be included in the electronic generating device 102, or in another device (e.g., a PC).

The manufacturer then delivers the printer 101 to the customer. Further, the manufacturer delivers the computer readable medium including the electronic signature C and the verification unit 103, etc. to the customer through another reliable delivery route, for example, a public mail system (step S14). In addition, a reliable delivery route can be direct delivery by a service man, or a download from a home page of the manufacturer, as well as public mail system. In addition, when the download is used as a reliable delivery route, the verification unit 103 is downloaded to the PC at the customer site.

In addition, the RSA public key of the manufacturer may not be included in the verification unit 103. For example, the RSA public key can be sent to the customer site from a third certification department which issues a public key certificate. However, for simplified explanation, the embodiment that the public key D is delivered to the customer site on condition that the public key D is included in the verification unit 103 will be described as below. Further, the electronic signature C and the verification unit 103 are delivered together to the customer site.

The customer gets the printer 101 and the computer readable medium including the electronic signature C and the verification unit 103 through different routes. The customer attaches the computer readable medium to the PC 104 and connects the printer 101 to the PC 104 by the parallel cable (step S15). Judgment of falsification and/or change is confirmed as below. In addition, as mentioned above, the PC 104 reads out the electronic signature C and the verification unit 103 from the computer readable medium. The verification unit 103 runs on the CPU of the PC 104.

The system management unit 121 of the printer 1 then collects specific information from each component and generates specific information *a.* The verification unit 103 gets specific information *a* (step S16). The verification unit 103 restores specific information *A* based on the public key D of the manufacturer and the electronic signature C (step S17). The verification unit 103 verifies the validity of the product by making comparisons between specific information *a* with specific information *A* (step S18). Further, the verification unit 103 displays verification result on a display of the PC 104 (step S19)

Therefore, in step S18, when specific information *a* is different from specific information *A*, it means that falsification and/or change of components occurred during the delivery. In step S19, the verification unit 103 causes the display device to display the indication that falsification and/or change of components occurred. Thus, the customer can confirm the existence of falsification and/or change and avoid using a dishonest product without noticing.

In addition, in the second embodiment the electronic generating unit 106 and the verification unit 103 are external to the printer 101 is described. However, the electronic generating unit 106 and/or the verification unit 103 can alternatively be provided in the printer 101. The printer 101 may print out the verification result, etc.

### (Third Embodiment)

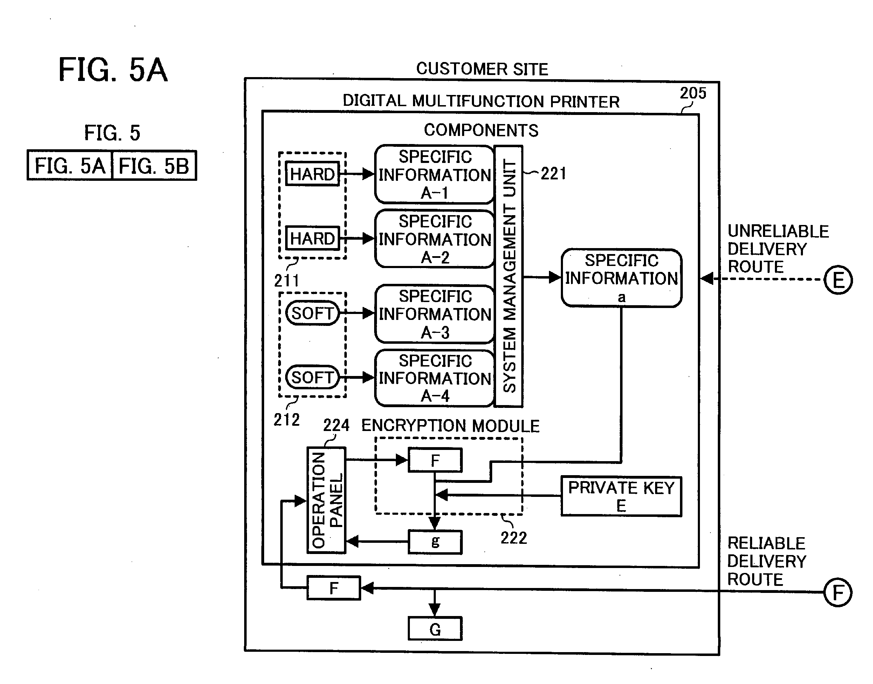

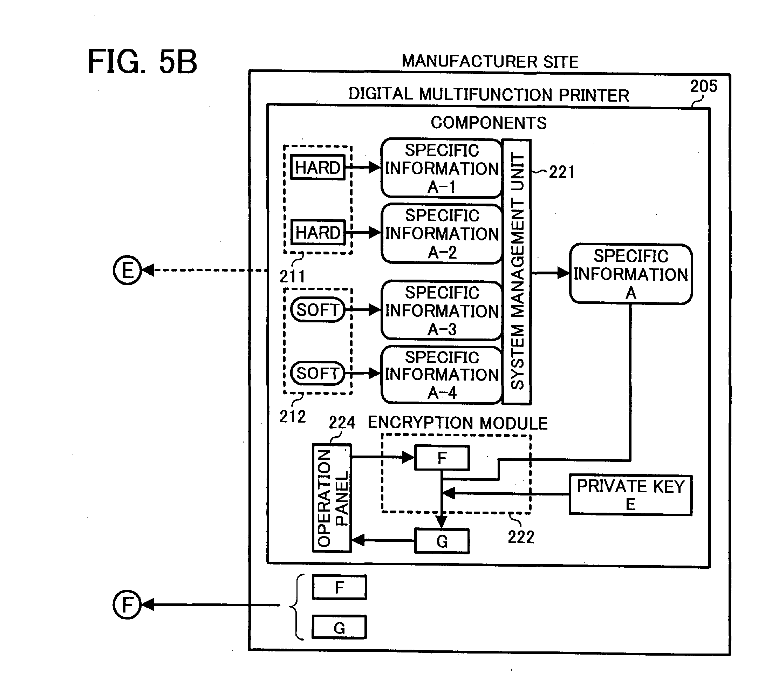

Figs. 5A and 5B are schematic views of a product validity verifying system in accordance with a third embodiment of the present invention. The points different from the first and second embodiments will be described as below. In this embodiment, a target product for verifying the validity is a digital multifunctional printer 205 including a copy function, etc. The digital multifunction printer 205 stores a private key E internally. The digital multifunction printer 205 includes an operation panel 224 having a screen and a keyboard and an encryption module 222 which encrypts specific information *A,* etc. based on the private key E. Further, hardware 211 of the digital multifunction printer 205 is, for example, a card (a network card, a parallel interface (I/F) card, etc.) including at least one of a CPU, a RAM, and a nonvolatile memory. Further, software 212 is an execution module for running the CPU (i.e., a CPU readable program).

The CPU of the digital multifunction printer 205 executes processes according to a program for carrying out the functions of the system management unit 221 or the encryption module 222, etc. When a number F (for example, 8 alpha numeric characters) is input to the encryption module 222 through the operation panel 224 by an operator (manufacturer) of the digital multifunction printer 205, the encryption module 222 requests the acquisition of specific information *A* to the system management unit 221.

When the system management unit 221 gets the request for the acquisition of specific information *A* from the encryption module 222, the system management unit 221 collects specific information (specific information *A-1, A-2, A-3* ... *A-N,* where *N is* a number of the components) of each component (hardware 211 and software 212) of the digital multifunction printer 205 and generates specific information *A* as aggregative specific information of the digital multifunction printer 205. The system management unit 221 provides specific information *A* with the requestor (i.e., the encryption module 222).

The encryption module 222 encrypts the number F input through the operation panel 224 and specific information *A* received from the system management unit 221 based on the private key E stored in hardware, etc. of the digital multifunction printer 205 and generates a value G. The encryption module 222 indicates the value G to the manufacturer, etc. through the operation panel 224. The manufacturer registers a combination of the input number F and the value G corresponding to the number F in order to offer the combination to a customer in writing.

Encryption method for getting the value G from the number F is, for example, common key encryption method such as triple DES of 128 bit key length encryption method. The private key E used in triple Data Encryption Standard (DES) encryption method shall be determined peculiarly in accordance with each product.

For example, the system management unit 221 provides 160 bits (20 bites) binary data that is a result of a hash function SHA-1 as specific information *A* with the encryption module 222. The encryption module 222 connects the number F (8 bites) to specific information *A* (160 bits (20 bites)) and generates 28 bites data. The encryption module 222 generates the value G by encrypting 28 bites data based on the private key E.

The manufacturer can set a different number F using random numbers, etc. for each digital multifunction printer. Further, when it is a possibility that a malicious third person cracks the encryption algorithm by trying a combination of a number F and a value G, the manufacturer can change the encryption specification into an appropriate one according to the frequency of envisioned attacks.

The manufacturer of the digital multifunction printer 205 delivers the digital multifunction printer 205 through a delivery route. Further, the manufacturer delivers a paper in which the combination of the number F and the value G are written through a reliable delivery route (e.g., public mail). In addition, the number F and the value G may not be written on paper. For example, the manufacturer registers the number F and the value G in a server so that the customer can download the number F and the value G from the server. The customer can download the number F and the value G from the server and use the number F and the value G for verifying the validity of the digital multifunction printer 205. For simplified explanation, the embodiment that the number F and the value G are written in a paper will be described below. A reliable delivery route can be direct delivery by a service man.

When the customer gets the digital multifunction printer 205 and a paper in which the number F and the value G are written through different routes, the customer inputs the number F written in the paper in the digital multifunction printer 205 through the operation panel 224.

The encryption module 222 encrypts the number F input through the operation panel 224 and specific information *A* received from the system management unit 221, based on the private key E stored in hardware of the digital multifunction printer 205 and generates a value g. The encryption module 222 causes the operation panel 224 to display the value g.

The customer verifies the validity of a product (e.g., the digital multifunction printer 205) by making comparisons between the value g on the operation panel 224 and the value G written in a paper, etc.

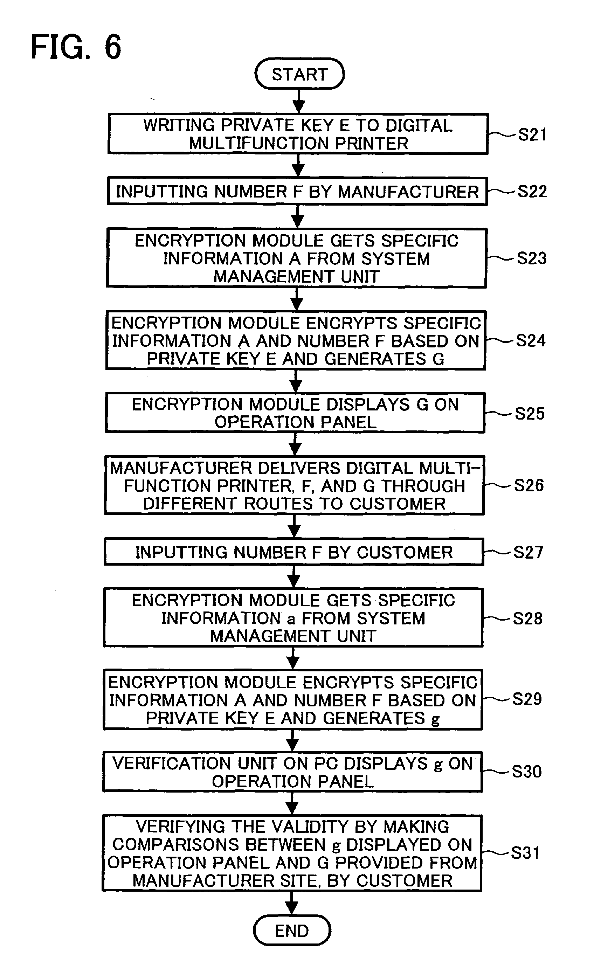

Fig. 6 is a flowchart illustrating a process of verifying the validity of a product in accordance with the third embodiment of the present invention. At the manufacturer site, the specific private key E for a product (e.g., the digital multifunction printer 205) is written in a computer readable product of the digital multifunction printer 205 (step S 21). The computer readable product is, for example, a nonvolatile memory or a tamper-proof IC chip. At the manufacturer, the number F is input into the digital multifunction printer 205 through the operation panel 224 (step S22).

When the number F is input into the digital multifunction printer 205 through the operation panel 224, the encryption module 222 of the digital multifunction printer 205 requests the acquisition of specific information *A* to the system management unit 221 and gets specific information from the system management unit 221 (step S23).

The encryption module 222 encrypts the number F input through the operation panel 224 in step S22 and specific information *A* received from the system management unit 221 in step S23, based on the private key E stored in hardware (e.g., a nonvolatile memory, a tamper- proof IC chip, etc.) of the digital multifunction printer 205 and generates the value G (step S24).

The manufacturer of the digital multifunction printer 205 delivers the digital multifunction printer 205 through a delivery route. Further, the manufacturer delivers a paper in which the combination of the number F and the value G are written through a reliable route (e.g., public mail) (step S25).

When the customer gets the digital multifunction printer 205 and a paper in which the number F and the value G are written through different routes, the customer inputs the number F written in the paper in the digital multifunction printer 205 through the operation panel 224 (step S26).

When the number F is input to the digital multifunction printer 205 through the operation panel 224, the encryption module 222 requests the acquisition of specific information *A* to the system management unit 21 and gets specific information *A* from the system management unit 221 (step S27).

The encryption module 22 encrypts the number F input through the operation panel 224 in step S26 and specific information *A* received from the system management unit in step S27, based on the private key E stored in hardware, etc. of the digital multifunction printer 205 and generates the value g (step S28). The encryption module 222 causes the operation panel 224 to display the value g.

The customer verifies the validity of a product by making comparisons between the value g displayed on the operation panel 224 by the encryption module 222 and the value G written in a paper, etc. (step S29).

In step S29, when the value G is different from the value g, it means that falsification and/or change of components occurred during the delivery. Thus, the customer can confirm the existence of falsification and/or change and avoid using a dishonest product without noticing.

The private key E is secret. For example, when a malicious third party changes hardware and/or software into dishonest hardware and/or software, then the customer will notice falsification and/or change by using the above-mentioned method. In addition, a product is not limited to the printer and the digital multifunction printer. The product can be other electronics devices and home electronic appliances. Further, components of the product can be either hardware or software.

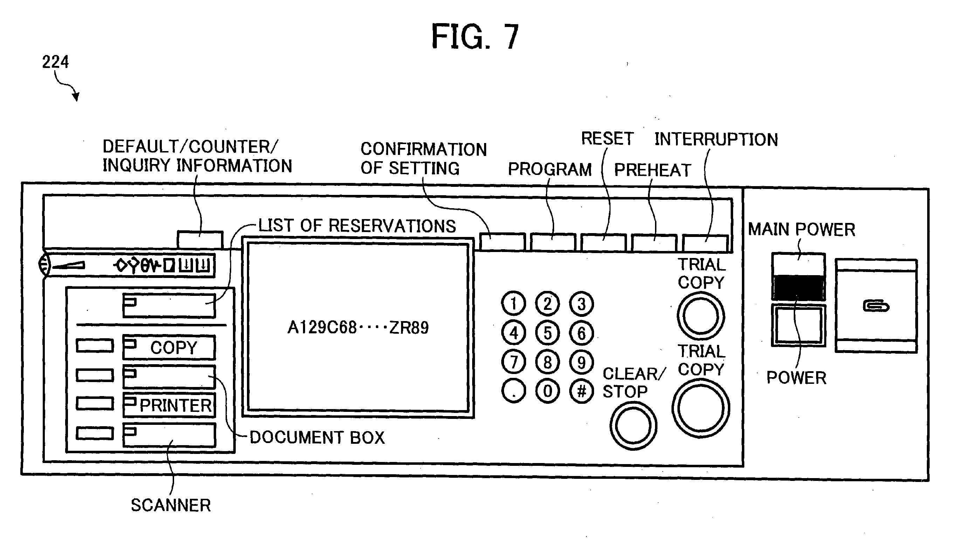

Fig. 7 is an explanatory display view of an encrypted result (value g) on the operation panel 224. After the customer of a product inputs a number through the operation panel 224, the customer can verify the validity of the product by making comparisons between the displayed encrypted result (i.e., the value g) and the value G written in a paper, etc. received from the manufacturer site.

Obviously, numerous modifications and variations of the present invention are possible in light of the above teachings. It is therefore to be understood that within the scope of the appended claims, the invention may be practiced otherwise than as specifically described herein.

## Claims

1. A product validity verifying system comprising:
a system management unit configured to collect specific information associated with components of a verification target product;
an electronic signature generating unit configured to generate an electronic signature based on the specific information provided from the system management unit; and
a verification unit configured to verify the validity of the target product based on making comparisons between specific information restored from the electronic signature and the specific information provided from the system management unit.

2. A product validity verifying system according to claim 1, wherein the electronic signature generating unit generates the electronic signature from specific information provided from the system management unit based on a private key of a manufacturer of the target product.

3. A product validity verifying system according to claim 2, wherein the verification unit is provided from the manufacturer to a customer of the target product and restores the restored specific information from the electronic signature based on a public key corresponding to the private key and verify the validity of the target product based on making comparisons between the restored specific information and the specific information provided from the system management unit.

4. A product validity verifying system according to claim 1, wherein the verification unit restores the restored specific information from the electronic signature stored in the target product.

5. A product validity verifying system according to claim 1, wherein the verification unit and the electronic signature are provided from the manufacturer to a customer of the target product, and wherein the verification unit restores the restored specific information from the electronic signature.

6. A product validity verifying system according to claim 1, wherein the system management unit is included in the target product.

7. A product validity verifying system according to claim 1, wherein the system management unit collects at least one of specific information associated with hardware of the target product and specific information associated with software of the target product, and wherein the system management unit generates specific information for the whole target product from collected specific information.

8. A product validity verifying system according to claim 7, wherein the system management unit provides specific information for the whole target product to a requestor.

9. A product validity verifying system according to claim 7, wherein the specific information of hardware is stored in a tamper-proof computer readable product built in the hardware.

10. A verification target apparatus comprising:
a system management unit configured to collect specific information associated with components of a target product and provide specific information to a requestor according to a request from the requestor.

11. A verification target apparatus according to claim 10, wherein the requestor is a verification unit for verifying the validity of the target product.

12. A verification target apparatus according to claim 10, wherein the requestor is an electronic signature generating unit for generating an electronic signature.

13. A verification target apparatus according to claim 10, further comprising:
an operation panel configured to receive input information from an operator and display various information for the operator; and
an encryption unit configured to encrypt the input information and the specific information,
wherein the system management unit provides specific information with the encryption unit according to a request of the encryption unit which is the requestor.

14. A verification target apparatus according to claim 13, wherein the encryption unit displays the encryption result on the operation panel.

15. A verification target apparatus according to claim 10, wherein the system management unit collects at least one of specific information associated with hardware of the target product and specific information associated with software of the target product, and wherein the system management unit generates specific information for a whole target product from collected specific information.

16. A verification target apparatus according to claim 15, wherein the system management unit provides specific information for the whole target product to the requestor.

17. A verification target apparatus according to claim 15, wherein the specific information of hardware is stored in a tamper-proof computer readable product built in the hardware.

18. A method for verifying the validity of a target product comprising:
collecting specific information associated with components of a target product;
generating an electronic signature based on the specific information provided from the collecting step; and
verifying the validity of the target product based on making comparisons between restored specific information restored from the electronic signature and the specific information provided from the collecting step.

19. A method for verifying the validity of a target product comprising:
a first specific information providing step collects specific information associated with components of a target product according to a request of an electronic signature generating unit for generating an electronic signature and provides the specific information to the electronic signature generating unit;
an electronic signature generating step generates an electronic signature based on the specific information provided by the first specific information providing step;
a second specific information providing step collects the specific information associated with components of the target product according to a request of a verification unit for verifying the validity of the target product and provides the specific information to the verification unit; and
a verification step verifies the validity of the target product based on making comparisons between restored specific information restored from the electronic signature and the specific information provided by the second specific information providing step.

20. A method according to claim 19, wherein the electronic signature generating step comprises generating an electronic signature from the specific information provided by the first specific information providing step, based on a private key of a manufacturer of the target product.

21. A method according to claim 19, wherein the verification step comprises restoring the restored specific information from the electronic signature stored in the target product.

22. A method according to claim 19, wherein the verification step comprises restoring the electronic signature provided from a manufacturer of the target product to a customer with the verification unit.

23. A method according to claim 19, wherein the system management unit is included in the target product.

24. A method according to claim 19, wherein the first specific information providing step and the second specific information providing step comprise collecting at least one of specific information associated with hardware of the target product and specific information associated with software of the target product, generating specific information for the whole target product from collected specific information, and providing specific information for the whole target product to a requestor.

25. A method according to claim 24, wherein the specific information of hardware is stored in a tamper-proof computer readable product built into the hardware.

26. A method for providing specific information in a verification target apparatus comprising:
collecting specific information associated with components of the target apparatus; and
providing specific information to a verification unit for verifying the validity of the target apparatus according to a request of the verification unit.

27. A method according to claim 26, further comprising the step of providing the specific information to an electronic signature generating unit for generating an electronic signature according to a request of the electronic signature generating unit.

28. A method according to claim 26, further comprising the steps of:
receiving input information from an operator through an operation panel and displaying various information on the operation panel for the operator; and
providing the specific information to an encryption unit for encrypting input information and the specific information according to a request of the encryption unit.

29. A method according to claim 28, further comprising the step of displaying the encryption result on the operation panel.

30. A method according to claim 26, wherein the specific information providing step comprises collecting at least one of specific information associated with hardware of the target product and specific information associated with software of the target product, generating specific information for the whole target product from collected specific information, and providing the specific information for the whole target product to a requestor.

31. A method according to claim 30, wherein the specific information of the hardware is stored in a tamper-proof computer readable product built into the hardware.

32. An apparatus comprising:
a plurality of components;
means for collecting specific information associated with said plurality of components and for providing the specific information to an electronic signature generating unit adapted to generate an electronic signature based on the specific information; and
means for providing the specific information to a requestor according to a request from the requestor, whereby a comparison can be made between restored specific information from the electronic signature and the specific information provided to the requestor.
